# EUROPÄISCHE PATENTSCHRIFT

(11) **EP 2 837 264 B1**
(45) Veröffentlichungstag und Bekanntmachung des Hinweises auf die Patenterteilung: **29.08.2018**
(21) Anmeldenummer: 13727502.0
(22) Anmeldetag: 15.04.2013
(51) Int. Cl.: H05B 33/08, H02M 3/335, H05B 37/02, H02M 7/04, H02M 1/00

(54) **WANDLER FÜR EIN LEUCHTMITTEL, LED-KONVERTER UND VERFAHREN ZUM BETREIBEN EINES WANDLERS**
CONVERTER FOR A LAMP, LED CONVERTER, AND CONVERTER OPERATION METHOD
CONVERTISSEUR POUR UN MOYEN D'ÉCLAIRAGE, CONVERTISSEUR DEL ET PROCÉDÉ DE FONCTIONNEMENT D'UN CONVERTISSEUR

(30) Priorität: 13.04.2012 DE 102012007478
(43) Veröffentlichungstag der Anmeldung: 18.02.2015
(73) Patentinhaber: Tridonic GmbH & Co. KG, 6851 Dornbirn (AT)
(72) Erfinder: VONACH, Christoph, A-6850 Dornbirn (AT); PEREIRA, Eduardo, CH-8854 Siebnen (CH)
(74) Vertreter: Banzer, Hans-Jörg
(86) Internationale Anmeldenummer: PCT/AT2013/000064
(87) Internationale Veröffentlichungsnummer: WO 2013/152367

(56) Entgegenhaltungen:
- EP-A1- 2 302 984
- WO-A2-2011/113960
- JP-A- 2011 060 615
- US-A1- 2009 273 301

## Beschreibung

Die Erfindung betrifft einen Wandler zur Versorgung eines Leuchtmittels, einen LED-Konverter und ein Verfahren zum Betreiben eines Wandlers. Die Erfindung betrifft insbesondere derartige Vorrichtungen und Verfahren, bei denen ein Leuchtmittel, insbesondere ein Leuchtmittel, das ein oder mehrere Leuchtdioden umfasst, mit einem so genannten SELV ("Separated Extra-Low Voltage" oder "Safety Extra-Low Voltage")-Gerät mit Energie versorgt wird. Die Erfindung betrifft weiterhin derartige Vorrichtungen und Verfahren, die ein Dimmen des Leuchtmittels erlauben.

Wandler mit Potentialtrennung dienen zur galvanisch entkoppelten Übertragung von elektrischer Energie von einer Eingangsseite zu einer Ausgangsseite. Derartige Wandler werden in verschiedenen Anwendungen zur Strom- oder Spannungsversorgung, wie beispielsweise in getakteten Schaltnetzteilen, eingesetzt. Bei getakteten Wandlern werden steuerbare Schalter, die in Form von Leistungsschaltern ausgestaltet sein können, verwendet und getaktet betrieben, um elektrische Energie auf die Ausgangsseite zu übertragen. Eine galvanisch entkoppelte Energieübertragung kann durch Verwendung eines Transformators oder anderen Übertragers erzielt werden. Eine derartige galvanische Trennung bzw. Potentialtrennung wird aus Sicherheitsgründen gefordert, um einen ELV ("Extra-Low Voltage")-Bereich durch eine so genannte Potentialbarriere oder SELV-Barriere von Bereichen mit höherer Versorgungsspannung, insbesondere Netzspannung, zu trennen.

Zum Betreiben von Leuchtmitteln können Wandler eingesetzt werden, die als so genannte resonante Wandler ausgestaltet sind, die einen Resonanzkreis aufweisen. Der Resonanzkreis kann ein Serien- oder Parallelresonanzkreis sein. Bei der Ausgestaltung von Wandlern besteht das Ziel, Verluste gering zu halten. Bei Wandlern, die für den Betrieb dimmbarer Leuchtmittel, insbesondere von Leuchtdioden (LEDs) wie anorganische LEDs oder organische LEDs (OLEDs), geeignet sein sollen, besteht zunehmend die Anforderung, eine Dimmbarkeit über einen weiten Bereich zu ermöglichen.

Eine Möglichkeit, einen Ausgangsstrom oder eine Ausgangsspannung auf der ELV-Seite eines Betriebsgeräts zu regeln, besteht darin, eine Regelgröße auf der ELV-Seite zu erfassen und zu verarbeiten. Der Regelschritt kann vollständig auf der ELV-Seite erfolgen, wobei beispielsweise ein Schalter auf der ELV-Seite abhängig von der Regelgröße betätigt wird. Alternativ kann der Regelschritt auch auf der Eingangsseite des Wandlers, die mit höherer Versorgungsspannung betrieben wird, durchgeführt werden. Dies erfordert jedoch bislang, dass die auf der Sekundärseite erfasste Regelgröße über einen Isolator zur Eingangsseite rückgeführt wird. Die Überbrückung der SELV-Barriere erfordert entsprechende Komponenten, die Bauraum und/oder Kosten des Betriebsgeräts erhöhen. Die US 2012/0033453 A1 beschreibt ein Beispiel für einen resonanten Wandler, der eine Halbbrücke und einen LLC-Kreis umfasst und bei dem ein Isolator vorgesehen ist, um eine ausgangsseitig gemessene Größe an die Eingangsseite zurückzuführen. Die US 2012/0033453 A1 beschreibt ein Beispiel für einen resonanten Wandler, bei dem abhängig von einer sekundärseitig erfassten Regelgröße Schalter in einem Niederspannungsbereich des Wandlers betätigt werden.

Aus der Druckschrift WO 2011/113960 A1 ist eine LED-Betriebsschaltung gemäß dem Oberbegriff des Anspruchs 1 bekannt, die einen isolierenden Energieübertragungswandler (DC/DC) aufweist, wobei der Wandler einen Inverter mit mindestens einem Schalter, einen durch den Inverter gespeisten Resonanzkreis, einen mit dem Resonanzkreis verbundenen Transformator, einen Gleichrichter und eine Steuereinheit, welche den mindestens einen Schalter steuert, aufweist.

Aus der Druckschrift JP 2011 060615 A1 ist eine LED-Beleuchtungsvorrichtung bekannt, die einen Resonanzkondensator, der seriell mit einer zweiten Induktionsspule verbunden ist, aufweist, wobei in der LED-Beleuchtungsvorrichtung ein Rückkopplungssteuerungsteil ein entsprechendes Signal bereitgestellt wird, das einem in der LED fließenden LED-Strom entspricht, und ein zu vergleichendes Signal zum Vergleichen mit dem entsprechenden Signal von einer Abblendsteuerung eingibt, welches ein Vergleichsergebnis durch Vergleichen des entsprechenden Signals mit dem verglichenen Signal erzeugt und das erzeugte Vergleichsergebnis an einen spannungsgesteuerten Oszillator ausgibt.

Aus der Druckschrift EP 2 302 984 A1 ist eine Beleuchtungsvorrichtung bekannt, welche eine Beleuchtungsschaltung, eine Dimmsignalschaltung und eine Vorwärtskopplungssteuerschaltung aufweist, wobei die Beleuchtungsschaltung eine Ausgabe VDC empfängt, die gleichgerichtet und geglättet ist, und Energie an eine Lichtquelle liefert. Dabei sendet die Dimmsignalschaltung ein Zeitsignal an die Beleuchtungsschaltung, wobei das Zeitsignal ein Signal zum periodischen Ein- oder Ausschalten oder zum Dimmen ist.

Aus der Druckschrift US 2009/273301 A1 ist eine Schaltung zum Ansteuern von LEDs bekannt, welche einen Transformator mit einer Sekundärwicklung zum Ansteuern der LEDs und einer Primärwicklung, eine Halbbrückenanordnung, die mit einer Eingangsspannung gespeist und mit dem Transformator gekoppelt ist und einen Resonanzkreis zwischen der Halbbrückenanordnung und die Primärwicklung des Transformators aufweist, wobei der Resonanzkreis eine gegebene Resonanzfrequenz aufweist. Die Schaltung weist ferner eine Steuerung auf, die zum Schalten der Halbbrückenanordnung mit einer Schaltfrequenz konfiguriert ist, welche zwischen ersten und zweiten Werten variabel ist. Dabei ist der zweite Wert näher als der erste Wert zu der Resonanzfrequenz des Resonanzkreises, der zwischen der Halbbrückenanordnung und der Primärwicklung des Transformators erzeugt wird, wodurch die Spannung, die über den Transformator den LEDs zugeführt wird, erhöht wird.

Es besteht ein Bedarf Vorrichtungen und Verfahren, die Verbesserungen im Hinblick auf die genannten Ziele bieten. Insbesondere besteht ein Bedarf an Vorrichtungen und Verfahren, bei denen der schaltungstechnische Aufwand und/oder die Kosten, die mit dem Überbrücken der SELV-Barriere verbunden sind, reduziert oder vermieden werden können. Es besteht auch ein Bedarf an derartigen Vorrichtungen und Verfahren, die eine effiziente Energieübertragung und Dimmbarkeit über einen weiten Bereich erlauben.

Erfindungsgemäß wird ein Wandler gemäß dem unabhängigen Anspruch 1 angegeben. Die abhängigen Ansprüche definieren Ausführungsformen.

Nach Ausführungsbeispielen der Erfindung wird ein Wandler, der eine primärseitige, getaktet betriebene Halbbrückenschaltung und einen LLC-Resonanzkreis umfasst, so betrieben, dass eine Ausgansstromstärke einer von der primärseitigen Schaltung galvanisch getrennten sekundärseitigen Schaltung abhängig von einer in der primärseitigen Schaltung erfassten Regelgröße geregelt wird. Die Wandler und Verfahren nach Ausführungsbeispielen verwenden dabei, dass ein Strom in der primärseitigen Schaltung, beispielsweise ein Peakstrom durch einen mit den Schaltern der Halbbrückenschaltung in Serie geschalteten Shunt-Widerstand, in einer bekannten Beziehung zu einer ausgangsseitig bereitgestellten Stromstärke steht. Die Ausgangsstromstärke kann basierend auf einer primärseitig erfassten Regelgröße geregelt werden, ohne dass dafür sekundärseitig die Ausgangsstromstärke erfasst und/oder über einen separaten Isolator über die SELV-Barriere rückgeführt werden muss. Die Regelgröße kann primärseitig mit einer Referenz verglichen werden. Dazu kann beispielsweise ein entsprechender Komparator verwendet werden. Durch die Verwendung eines resonanten Wandlers, der mit einem LLC-Resonanzkreis ausgeführt ist, und Halbbrückenansteuerung kann eine effiziente Energieübertragung und Dimmbarkeit erreicht werden. Zum Dimmen bzw. zum Umsetzen von Helligkeitsbefehlen kann die Referenz angepasst werden, mit der die Regelgröße verglichen wird. Die Regelung der Ausgangsstromstärke kann erfolgen, ohne dass dafür sekundärseitig entsprechende Logik und/oder Schalter vorgesehen sein müssen.

Nach einem Ausführungsbeispiel wird ein Wandler mit Potentialtrennung angegeben, der zur Versorgung eines Leuchtmittels eingerichtet ist. Der Wandler umfasst eine primärseitige Schaltung mit einer Halbbrückenschaltung, die zwei wechselseitig getaktete Schalter aufweist, und mit einem Resonanzkreis, der mit einem Knoten zwischen den zwei Schaltern gekoppelt ist. Der Resonanzkreis umfasst einen LLC-Resonanzkreis und kann insbesondere ein Serien-LLC-Resonanzkreis sein. Der Wandler umfasst eine sekundärseitige Schaltung mit einem Ausgang zur Energieversorgung des Leuchtmittels. Eine Steuereinrichtung ist eingerichtet, um die Halbbrückenschaltung abhängig von einer in der primärseitigen Schaltung erfassten Regelgröße zu steuern, um eine von der sekundärseitigen Schaltung an das Leuchtmittel bereitgestellte Stromstärke auf einen Sollwert zu regeln. Die Steuereinrichtung ist eingerichtet, um die Halbbrückenschaltung abhängig von einem Vergleich der Regelgröße mit einer Referenz zu steuern. Die primärseitige Schaltung ist ferner eingerichtet, um Informationen über eine Versorgungsspannung der primärseitigen Schaltung an die Steuereinrichtung bereitzustellen. Die Steuereinrichtung ist ferner eingerichtet, um die Referenz abhängig von den Informationen über die Versorgungsspannung zu ändern.

Ein derartiger Wandler erlaubt die Regelung der Ausgangsstromstärke, ohne dass diese sekundärseitig erfasst und/oder über die SELV-Barriere rückgeführt werden muss. Durch die Ausgestaltung der Steuereinrichtung wird ferner eine einfache und kostengünstige Implementierung der Regelung der Ausgangsstromstärke ermöglicht.

Der Wandler kann als Konstantstromquelle bzw. FCC-Gerät ("Fixed Constant Current") ausgebildet sein. Der Wandler kann als ein Gerät mit galvanischer Trennung zwischen dem SELV-Bereich und dem Nicht-SELV-Bereich ausgestaltet sein.

Die Steuereinrichtung kann eingerichtet sein, um eine Frequenz, mit der die zwei Schalter der Halbbrückenschaltung geschaltet werden, abhängig von der erfassten Regelgröße einzustellen, um die von der sekundärseitigen Schaltung an das Leuchtmittel bereitgestellte Stromstärke auf den Sollwert zu regeln. Die Steuereinrichtung kann die Frequenz, mit der jeder der zwei Schalter geschaltet wird, anpassen.

Der Wandler kann einen mit der Steuereinrichtung gekoppelten Komparator zum Vergleichen der Regelgröße mit der Referenz umfassen. Die Referenz kann ein analoges Referenzsignal sein, das von der Steuereinrichtung an den Komparator bereitgestellt werden kann.

Die Versorgungsspannung kann eine Busspannung sein, die von einer Glättungsschaltung bzw. Schaltung zur Leistungsfaktorkorrektur (PFC-Schaltung, "Power Factor Correction") bereitgestellt wird.

Die Steuereinrichtung kann eingerichtet sein, um die Referenz abhängig von einer Welligkeit der Versorgungsspannung zu ändern. Die Steuereinrichtung kann eingerichtet sein, um die Referenz abhängig von der Welligkeit der Versorgungsspannung mit einer zeitlichen Periode zu ändern, die der Periode der Welligkeit der Versorgungsspannung entspricht.

Die Steuereinrichtung kann eingerichtet sein, um die Referenz abhängig von einem Dimmbefehl zu ändern. Die Ausgestaltung des Wandlers als resonanter Wandler mit getaktetem Betrieb erlaubt eine Dimmbarkeit über einen weiten Bereich.

Die Steuereinrichtung kann eingerichtet sein, um abhängig von einer in der primärseitigen Schaltung erfassten Messgröße Informationen über eine Last, die mit dem Ausgang der sekundärseitigen Schaltung verbunden ist, zu ermitteln. Somit kann auch die Last erkannt werden, ohne dass dafür die SELV-Barriere überbrückt werden muss. Die Messgröße kann von der Regelgröße verschieden sein.

Die Steuereinrichtung kann eingerichtet sein, um abhängig von der Messgröße Änderungen einer Anzahl von LEDs, die mit dem Ausgang der sekundärseitigen Schaltung verbunden sind, zu detektieren. Die Steuereinrichtung kann eingerichtet sein, um die Referenz abhängig von der Last, die mit dem Ausgang der sekundärseitigen Schaltung verbunden ist, zu ändern, ohne dafür ein über einen Isolator von der sekundärseitigen Schaltung rückgeführtes Signal zu benötigen. Die Steuereinrichtung kann eingerichtet sein, um die Referenz so zu ändern, dass durch Änderungen der Last induzierte Änderungen des Ausgangsstroms durch die Anpassung der Referenz reduziert werden. Die Steuereinrichtung kann eingerichtet sein, um die Referenz so zu ändern, dass für unterschiedliche Zahlen von LEDs, die von dem Wandler versorgt werden, durch den Wandler eine konsistente Stromstärke bereitgestellt wird. Schwankungen, die durch Änderungen der Last verursacht sind, können kleiner als ein Schwellenwert gehalten werden. Die lastabhängige Kompensation kann durch die Steuereinrichtung rechnerisch und/oder unter Verwendung hinterlegter Daten zur Kompensation, beispielsweise kennfeldbasiert, erfolgen.

Alternativ oder zusätzlich kann die Steuereinrichtung eingerichtet sein, um abhängig von der Messgröße eine Prozedur zur Begrenzung der abgegebenen Leistung einzuleiten.

Alternativ oder zusätzlich kann die Steuereinrichtung eingerichtet sein, um abhängig von der Messgröße eine Fehlerdetektion durchzuführen und bei Detektion eines Fehlerzustands einen Fehler-Betriebszustand einzuleiten. Beispiele für von der Steuereinrichtung detektierte Fehler beinhalten einen Kurzschluss und/oder eine offene Schaltung am Ausgang des Wandlers. Der Fehler-Betriebszustand kann so realisiert werden, dass die Steuereinrichtung ein Signal ausgibt, das den Fehler anzeigt, eine Sicherheitsabschaltung einleitet und/oder andere Maßnahmen einleitet, die unerlaubte Betriebszustände des Wandlers verhindern.

Alternativ oder zusätzlich kann die Steuereinrichtung eingerichtet sein, um abhängig von der Messgröße ein Signal auszugeben, das Informationen über die erkannte Last enthält. Ein derartiges Signal kann beispielsweise ein gemäß dem DALI ("Digital Addressable Lighting Interface")-Standard erzeugtes Signal, z.B. ein Datentelegramm sein. Das Signal kann als Antwort auf eine entsprechende DALI-Anfrage erzeugt werden.

Die Regelgröße kann proportional zu einem Peak-Wert eines Stroms in der primärseitigen Schaltung sein, und die Messgröße kann proportional zu einem Durchschnittswert desselben Stroms in der primärseitigen Schaltung sein. Die primärseitige Schaltung kann einen Shunt-Widerstand umfassen, der mit den Schaltern der Halbbrückenschaltung in Serie geschaltet ist. Die Regelgröße kann proportional zu einem Peakstrom durch den Shunt-Widerstand sein, und die Messgröße kann proportional zu einem Durchschnittswert des Stroms durch den Shunt-Widerstand sein.

Der Resonanzkreis kann ein induktives Element und ein kapazitives Element umfassen, die mit einer Primärspule eines Transformators in Serie geschaltet sind. Der Resonanzkreis kann zwei Induktivitäten und eine Kapazität in einer Serienschaltung umfassen.

Die sekundärseitige Schaltung kann ein mit dem Ausgang verbundenes weiteres induktives Element umfassen. Die sekundärseitige Schaltung kann einen Gleichrichter und eine dem Ausgang des Gleichrichters nachgeschaltete Induktivität umfassen.

Nach einem weiteren Ausführungsbeispiel wird ein LED-Konverter bereitgestellt, der den Wandler nach einem Ausführungsbeispiel umfasst.

Nach einem Beispiel wird ein Beleuchtungssystem angegeben, das den LED-Konverter und ein damit gekoppeltes Leuchtmittel umfasst. Das Leuchtmittel kann ein oder mehrere Leuchtdioden (LEDs) umfassen. Die LEDs können anorganische und/oder organische LEDs umfassen. Die LEDs können in ein LED-Modul integriert sein, das separat von dem LED-Konverter ausgeführt ist. Das Beleuchtungssystem kann weiterhin eine zentrale Steuerung umfassen, die eingerichtet ist, um Dimmbefehle an den LED-Konverter zu übermitteln.

Nach einem weiteren Beispiel wird ein Verfahren zum Betreiben eines Wandlers für ein Leuchtmittel angegeben. Der Wandler umfasst eine primärseitige Schaltung und eine davon galvanisch getrennte sekundärseitige Schaltung. Die primärseitige Schaltung umfasst eine Halbbrückenschaltung, die zwei wechselseitig getaktete Schalter aufweist, und einen Resonanzkreis, der mit einem Knoten zwischen den zwei Schaltern gekoppelt ist, wobei der Resonanzkreis einen LLC-Resonanzkreis umfasst. Bei dem Verfahren wird die Halbbrückenschaltung abhängig von einer in der primärseitigen Schaltung erfassten Regelgröße so gesteuert, dass eine von der sekundärseitigen Schaltung an das Leuchtmittel abgegebene Stromstärke auf einen Sollwert geregelt wird.

Die Erfindung wird nachfolgend unter Bezugnahme auf die beigefügte Zeichnung anhand bevorzugter Ausführungsbeispiele näher erläutert.
FIG. 1 zeigt eine schematische Darstellung eines Beleuchtungssystems mit einem LED-Konverter nach einem Ausführungsbeispiel.
FIG. 2 zeigt ein Schaltbild eines Wandlers nach einem Ausführungsbeispiel.
FIG. 3 zeigt von der Steuereinrichtung des Wandlers erzeugte Steuerbefehle zur Halbbrückensteuerung.
FIG. 4 ist ein Flussdiagramm eines Verfahrens nach einem Beispiel.
FIG. 5 zeigt ein Schaltbild eines Wandlers nach einem weiteren Ausführungsbeispiel.
FIG. 6 ist ein Flussdiagramm eines Verfahrens nach einem Beispiel.
FIG. 7 veranschaulicht die Anpassung einer Referenz abhängig von einer Welligkeit einer Busspannung zur weiteren Erläuterung der Funktionsweise von Wandlern und Verfahren nach Ausführungsbeispielen.
FIG. 8 veranschaulicht die Anpassung einer Referenz abhängig von einer Last zur weiteren Erläuterung der Funktionsweise von Wandlern und Verfahren nach Ausführungsbeispielen.
FIG. 9 zeigt ein Schaltbild eines Wandlers nach einem weiteren Ausführungsbeispiel.
FIG. 10 zeigt ein Schaltbild eines Wandlers nach einem weiteren Ausführungsbeispiel.

Die Merkmale der verschiedenen nachfolgend beschriebenen Ausführungsbeispiele können miteinander kombiniert werden, sofern dies in der nachfolgenden Beschreibung nicht ausdrücklich ausgeschlossen ist.

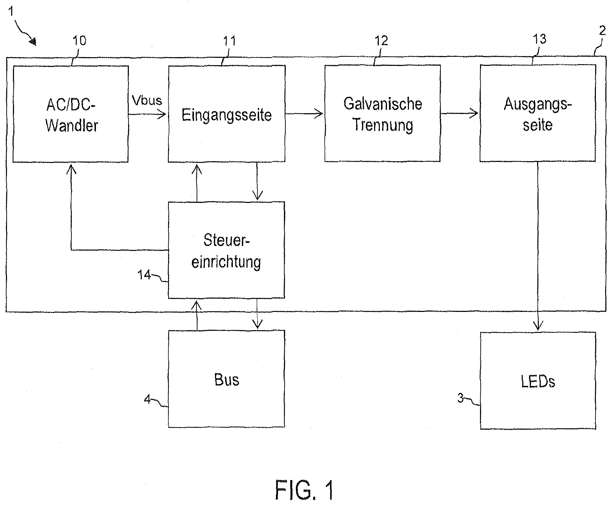

FIG. 1 zeigt ein Beleuchtungssystem 1, bei dem ein Betriebsgerät 2 nach einem Ausführungsbeispiel LEDs 3 mit Energie versorgt. Das Betriebsgerät 2 kann als LED-Konverter ausgestaltet sein. Der LED-Konverter 2 kann als Konstantstromquelle ausgebildet sein. Der LED-Konverter 2 kann so ausgestaltet sein, dass die Helligkeit der LEDs 3 über Befehle, die beispielsweise über einen Bus 4 oder drahtlos übertragen werden, einstellbar ist. Der LED-Konverter 2 kann eine entsprechende Schnittstelle zur Kommunikation mit einem zentralen Steuergerät umfassen und eingerichtet sein, um über die Schnittstelle Dimmbefehle zu empfangen und um über die Schnittstelle Informationen über den Betriebszustand des LED-Konverters 2 und/oder der LEDs 3 auszugeben.

Der LED-Konverter 2 kann als SELV-Gerät ausgestaltet sein, bei der eine primärseitige Schaltung (beispielsweise eine nicht-SELV-Seite) und eine sekundärseitige Schaltung (beispielsweise eine SELV-Seite) galvanisch getrennt sind. Der LED-Konverter 2 kann einen AC/DC-Wandler 10 umfassen. Der AC/DC-Wandler 10 kann eingerichtet sein, um eingangsseitig mit einer Netzspannung gekoppelt zu werden. Der AC/DC-Wandler 10 kann als so genannte Glättungsschaltung oder Schaltung zur Leistungsfaktorkorrektur (PFC) ausgestaltet sein. Der AC/DC-Wandler 10 stellt eine Busspannung Vbus an einen Wandler bereit, der eine eingangs- bzw. primärseitige Schaltung 11 und eine davon galvanisch getrennte ausgangs- bzw. sekundärseitige Schaltung 13 aufweist. Eine galvanische Trennung wird durch einen Transformator 12 oder anderen Umsetzer erreicht.

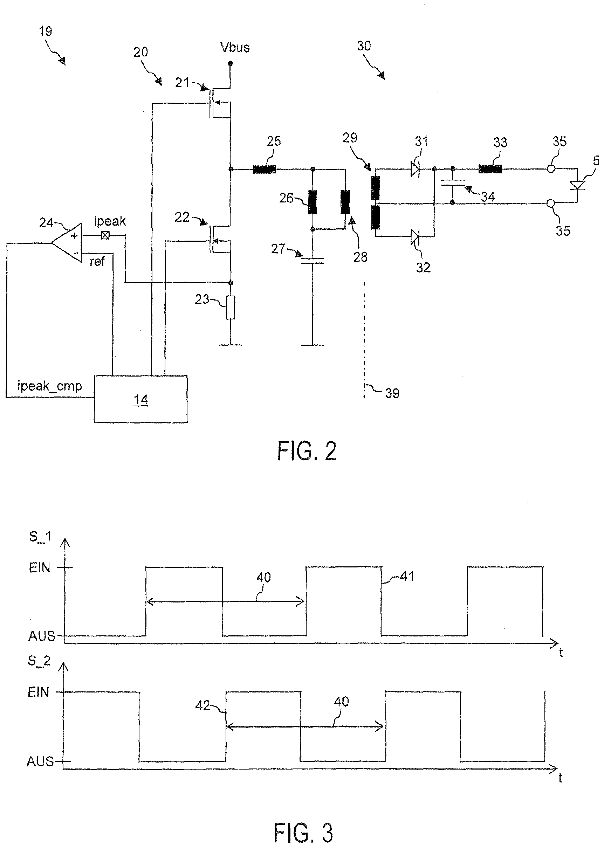

Der LED-Konverter 2 ist so ausgestaltet, dass eine vom LED-Konverter 2 an die LEDs bereitgestellte Stromstärke auf einen Sollwert geregelt wird. Die Regelung erfolgt dabei basierend auf einer in der primärseitigen Schaltung 11 erfassten Regelgröße, die insbesondere ein Peakstrom durch einen Widerstand oder eine zu diesem Peakstrom proportionale Größe sein kann. Zusätzlich zum Ausgansstrom kann auch eine Ausgangsleistung eingestellt werden. Zur Regelung des Ausgansstroms abhängig von der in der primärseitigen Schaltung erfassten Regelgröße ist die Steuereinrichtung 14 entsprechend mit der primärseitigen Schaltung 11 gekoppelt, um die Regelgröße oder Informationen über einen Vergleich der Regelgröße mit einer Referenz zu empfangen. Die Steuereinrichtung 14 steuert eine Halbbrückenschaltung der primärseitigen Schaltung 11 abhängig von dem Vergleich der Regelgröße mit der Referenz. Die Steuereinrichtung 14 kann insbesondere eine Frequenz, mit der zwei Schalter der Halbbrückenschaltung geschaltet werden, abhängig von dem Vergleich der Regelgröße mit der Referenz ändern. Die Steuereinrichtung 14 kann zusätzlich weitere Funktionen erfüllen, wie die Anpassung der Referenz abhängig von einem Dimmbefehl, die Erkennung der mit dem LED-Konverter 2 verbundenen Last, insbesondere zur Erkennung einer Anzahl von LEDs oder der Ausgangsleistung, und/oder die Erkennung von Fehlerzuständen. Derartige Funktionen und Ausgestaltungen werden unter Bezugnahme auf FIG. 2-10 näher beschrieben. Die Steuereinrichtung 14 kann auch mit dem AC/DC-Wandler gekoppelt sein, um beispielsweise die Busspannung anzupassen.

Wie in FIG. 1 schematisch dargestellt ist, kann bei dem LED-Konverter 2 der Ausgansstrom, der an die LEDs 3 bereitgestellt wird, geregelt werden, ohne dass dafür eine Messung auf der SELV-Seite durchgeführt werden muss und/oder ohne dass ein entsprechendes Messergebnis über die SELV-Barriere zurückgeführt werden muss. Die Steuereinrichtung 14 ist so eingerichtet, dass sie abhängig von einem primärseitig gemessenen Peakstrom wenigstens eine Komponente der primärseitigen Schaltung 11 steuert, um den Ausgangsstrom, der von dem Betriebsgerät 2 an die LEDs 3 bereitgestellt wird, auf einen gewünschten Wert zu regeln.

FIG. 2 ist ein Schaltbild eines Wandlers 19 nach einem Ausführungsbeispiel. Der Wandler 19 umfasst eine primärseitige Schaltung 20 und eine sekundärseitige Schaltung 30. Es liegt Potentialtrennung zwischen der primärseitigen Schaltung 20 und der sekundärseitigen Schaltung 30 vor. Zur Trennung kann ein Transformator mit einer Primärspule 28 und einer Sekundärspule 29 vorgesehen sein. Der Transformator weist eine Hauptinduktivität auf, die auch als eine der Induktivitäten eines LLC-Resonanzkreises wirken kann. Diese ist in der FIG. 2 symbolisch als zweite Induktivität 26 dargestellt. Der Wandler 19 kann bei dem LED-Konverter 2 oder bei einem anderen Betriebsgerät zum Betreiben von LEDs verwendet werden, um die Funktionen der in FIG. 1 dargestellten primärseitigen Schaltung 11, der galvanischen Trennung 12 und der sekundärseitigen Schaltung 13 zu erfüllen. Der Wandler 19 wirkt als DC/DC-Wandler. Die primärseitige Schaltung 20 kann ein nicht-SELV-Bereich sein und die sekundärseitige Schaltung 30 kann ein SELV-Bereich sein, die durch eine SELV-Barriere 39 getrennt sind.

Die primärseitige Schaltung 20 umfasst einen LLC-Resonanzkreis, der als Serienresonanzkreis ausgestaltet ist. Der LLC-Resonanzkreis weist eine erste Induktivität 25, eine zweite Induktivität 26 und eine Kapazität 27 in einer Serienschaltung auf. Die zweite Induktivität 26 ist wie gesagt die Streuinduktivität der Primärspule 28. Das zweite induktive Element 26 repräsentiert wie gesagt die Hauptinduktivität der Primärspule 28 des Transformators. Das zweite induktive Element 26 kann die Haupt-Induktivität des Resonanzkreises sein, deren Induktivität größer als die erste Induktivität 25 ist. Auch die erste Induktivität 25 kann in den Transformator integriert sein und beispielsweise eine Streuinduktivität sein. Alternativ kann auch eine zusätzliche Induktivität zusätzlich zu der Primärspule 28 des Transformators angeordnet werden und auch als eine der zwei Induktivitäten des LLC-Resonanzkreises wirken. Andere Ausgestaltungen des LLC-Resonanzkreises sind ebenfalls möglich. Beispielsweise kann die Kapazität 27 zwischen die erste Induktivität 25 und die zweiten Induktivität 26 geschaltet sein.

Die primärseitige Schaltung 20 umfasst eine Halbbrückenschaltung mit einem ersten Schalter 21, der ein Leistungsschalter sein kann, und einem zweiten Schalter 22, der ein Leistungsschalter sein kann. Der erste Schalter 21 und der zweite Schalter 22 können identisch sein, und die Halbbrückenschaltung kann als symmetrische Halbbrückenschaltung ausgebildet sein. Ein Shunt-Widerstand 23 ist mit dem ersten Schalter 21 und dem zweiten Schalter 22 in Serie geschaltet. Der Resonanzkreis ist mit einem Knoten zwischen dem ersten Schalter 21 und dem zweiten Schalter 22 verbunden. Der Resonanzkreis ist mit der Mitte der Halbbrückenschaltung zwischen den zwei Schaltern 21 und 22 verbunden. Ein erster Anschluss der ersten Induktivität 25 des Resonanzkreises kann mit dem Knoten zwischen dem ersten Schalter 21 und dem zweiten Schalter 22 der Halbbrückenschaltung verbunden sein. Ein zweiter Anschluss der ersten Induktivität 25 kann mit einem ersten Anschluss der zweiten Induktivität 26 des Resonanzkreises verbunden sein. Ein zweiter Anschluss der zweiten Induktivität 26 des Resonanzkreises kann mit einem ersten Anschluss der Kapazität 27 verbunden sein.

Im Betrieb des Wandlers 19 steuert die Steuereinrichtung 14 den ersten Schalter 21 und den zweiten Schalter 22. Dabei kann jeder der Schalter jeweils mit derselben vorgegebenen Frequenz ein- und ausgeschaltet werden. Die Steuereinrichtung 14 steuert den ersten Schalter 21 und den zweiten Schalter 22 so, dass immer nur einer der beiden Schalter leitend geschaltet ist. Der erste Schalter 21 und der zweite Schalter 22 werden von der Steuereinrichtung 14 wechselseitig getaktet betrieben. Die Totzeit zwischen dem Ausschalten eines Schalters und dem Einschalten des jeweils anderen Schalters kann klein sein, insbesondere viel kleiner als das Inverse der Schaltfrequenz.

FIG. 3 zeigt schematisch den Zustand des ersten Schalters 21 in Kurve 41 und den Zustand des zweiten Schalters 22 in Kurve 42, wie er von der Steuereinrichtung 14 eingestellt wird. Ein Zeitintervall 40 zwischen zwei steigenden Flanken der an die Schalter von der Steuereinrichtung 14 angelegten Gatespannung ist von der Schaltfrequenz abhängig, die allgemein auf die Resonanzfrequenz des LLC-Schwingkreises abgestimmt sein kann. Die Frequenz, mit der der erste Schalter 21 und der zweite Schalter 22 geschaltet werden, kann von der Steuereinrichtung 14 verändert werden, um einen an einem Ausgang 35 des Wandlers für eine Last 5 bereitgestellten Strom auf einem bestimmten Sollwert zu regeln. Die Steuereinrichtung 14 kann so eingerichtet sein, dass die Frequenz, mit der der erste Schalter 21 und der zweite Schalter 22 geschaltet werden, abhängig von einem Peakstrom durch den Shunt-Widerstand 23 eingestellt wird, wie noch näher beschrieben werden wird.

Wie in FIG. 2 dargestellt, weist die sekundärseitige Schaltung 30 einen der Sekundärspule 29 nachgeschalteten Gleichrichter auf, der beispielsweise durch eine erste Diode 31 und eine zweite Diode 32 gebildet sein kann. Eine Mitte der Sekundärspule 29 kann mit einem Ausgang der sekundärseitigen Schaltung gekoppelt sein. Enden der Sekundärspule 29 können über die Dioden 31 und 32 mit dem Ausgang 35 gekoppelt sein. Zur Glättung des Ausgangsstroms kann ein induktives Element 33, beispielsweise eine Spule, vorgesehen sein, durch das dem Ausgang 35 Strom zugeführt wird. Ein Kondensator 34 kann zwischen die Ausgänge des Gleichrichters geschaltet sein. Der Kondensator 34 kann eine verhältnismäßig kleine Kapazität aufweisen. Durch die Ausgestaltung der sekundärseitigen Schaltung 30 mit dem induktiven Element 33 kann der Wandler 19 als Konstantstromquelle bzw. FCC-Gerät betrieben werden.

Eine mit dem Ausgang 35 verbundene Last 5 kann ein LED, eine LED-Strecke mehrere LEDs oder mehrere LED-Strecken umfassen. Die LEDs können in ein LED-Modul integriert sein.

Eine Regelung des Ausgangsstroms am Ausgang 35 des Wandlers 19 erfolgt abhängig von einem primärseitig gemessenen Peakstrom und durch Steuerung der primärseitigen Schalter der Halbrückenschaltung. Um den Ausgangsstrom auf den Sollwert zu regeln, ist es nicht erforderlich, in der sekundärseitigen Schaltung 30 Schalter und/oder eine Auswertelogik für einen Regelschritt vorzusehen. Wie in FIG. 2 dargestellt, kann die sekundärseitige Schaltung 30 so ausgestaltet sein, dass sie keine Auswertelogik für einen Regelschritt umfasst. Darüber hinaus ist kein Isolator erforderlich, um eine Regelgröße über die SELV-Barriere zu übertragen.

Als Regelgröße kann der Peakstrom durch den Shunt-Widerstand 23 verwendet werden. Der Peakstrom durch den Shunt-Widerstand 23 steht bei dem Wandler 19 in einer bekannten Beziehung zu dem Ausgangsstrom an dem Ausgang 35 des Wandlers. Entsprechend kann der Peakstrom durch den Shunt-Widerstand 23, der primärseitig erfassbar ist, verwendet werden, um den Ausgangsstrom des Wandlers 19 zu regeln und den Wandler 19 als FCC-Gerät zu betreiben. Abhängig von der primärseitig erfassten Regelgröße kann die Halbbrücke entsprechend angesteuert werden, um den Ausgangsstrom zu regeln. Es ist nicht erforderlich, zur Regelung des Ausgangsstroms sekundärseitige Schalter vorzusehen.

Der Wandler 19 kann so eingerichtet sein, dass der Peakstrom ipeak durch den Shunt-Widerstand 23 mit einer Referenz ref verglichen wird. Dazu kann ein Komparator 24 vorgesehen sein. Einem ersten Eingang des Komparators 24 wird ein Signal zugeführt, das proportional zu einem Strom durch den Shunt-Widerstand ist. Einem zweiten Eingang des Komparators wird die Referenz ref zugeführt. Die Referenz ref kann beispielsweise von der Steuereinrichtung 14 erzeugt werden. Ein Ausgangssignal ipeak_cmp des Komparators 24 kann anzeigen, ob der Peakstrom durch den Shunt-Widerstand 23 die Referenz ref übersteigt. Abhängig davon, ob der Peakstrom durch den Shunt-Widerstand 23 die Referenz ref übersteigt, kann die Steuereinrichtung 14 die Frequenz anpassen, mit der der erste Schalter 21 und der zweite Schalter 22 geschaltet werden. Die Regelung des Ausgangsstroms des Wandlers 19 erfolgt abhängig von dem primärseitig erfassten Peakstrom ipeak und durch Ansteuerung der Halbbrückenschaltung in der primärseitigen Schaltung. Ein Vergleich zwischen dem primärseitig erfassten Peakstrom ipeak und der Referenz ref kann mit einem geringen schaltungstechnischen Aufwand unter Verwendung des Komparators 24 durchgeführt werden.

Die Anpassung der Frequenz, mit der der erste Schalter 21 und der zweite Schalter 22, geschaltet werden, kann von der Steuereinrichtung 14 durch Verwendung vorgegebener Frequenz- oder Zeitinkremente und/oder kennfeldbasiert erfolgen. Die Steuereinrichtung 14 kann als integrierte Halbleiterschaltung ausgestaltet sein, die eine anwendungsspezifische Spezialschaltung sein kann. Die Steuereinrichtung 14 kann insbesondere als ASIC ("Application Specific Integrated Circuit") ausgestaltet sein. Die Steuereinrichtung 14 kann auch als programmierbare Schaltung ausgestaltet sein, die durch Firmware oder Software so programmiert ist, dass sie die Steuerung der Halbbrückenschaltung abhängig von dem Peakstrom durch den Shunt-Widerstand 23 anpasst.

Bei einer Ausgestaltung des Wandlers 19 kann die Steuereinrichtung 14 die Halbbrückenschaltung abhängig von einem Vergleich des primärseitig erfassten Peakstroms mit einer vorgegebenen, festen Referenz steuern. Bei weiteren Ausführungsbeispielen kann die Steuereinrichtung 14 die Referenz verändern, um zusätzliche Funktionen zu erfüllen, beispielweise um eine Welligkeit des Ausgangsstroms zu verringern, einen Dimmbefehl umzusetzen und/oder lastabhängige Veränderungen des Ausgangsstroms zu kompensieren.

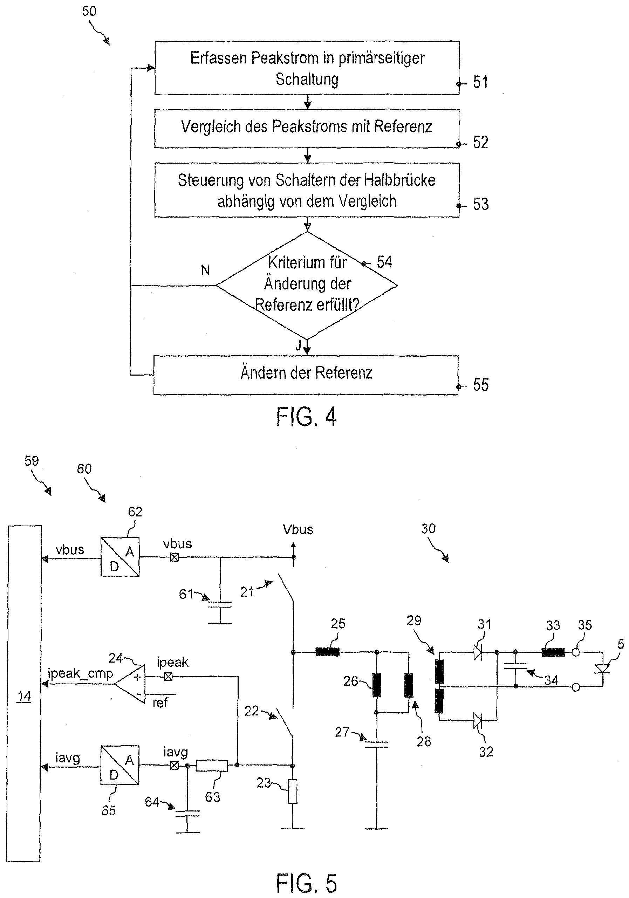

FIG. 4 ist ein Flussdiagramm eines Verfahrens 50, das von der Steuereinrichtung 14 zum Steuern eines Wandlers durchgeführt werden kann. Der Wandler kann als Wandler nach einem Ausführungsbeispiel ausgestaltet sein. Der Wandler weist eine primärseitige Schaltung und eine davon galvanisch getrennte sekundärseitige Schaltung auf. Die primärseitige Schaltung kann beispielsweise ein nicht-SELV-Bereich des Wandlers sein und die sekundärseitige Schaltung kann der SELV-Bereich des Wandlers sein.

Bei 51 wird ein Peakstrom in der primärseitigen Schaltung erfasst. Der Peakstrom kann der Peakstrom durch einen Shunt-Widerstand sein, der mit Schaltern einer Halbbrückenschaltung in Serie geschaltet ist. Bei 52 wird der Peakstrom mit einer Referenz verglichen. Dabei kann ermittelt werden, ob der Peakstrom die Referenz übersteigt. Bei 53 wird die Halbbrückenschaltung basierend auf einem Ergebnis des Vergleichs gesteuert. Dabei kann eine Frequenz, mit der der Halbbrückenschaltung getaktet geschaltet werden, selektiv abhängig davon angepasst werden, ob der Peakstrom die Referenz übersteigt. Die Schritte 51-53 können wiederholt werden.

Wenn ein oder mehrere Regelzyklen mit Schritten 51-53 durchlaufen wurden, kann bei 54 überprüft werden, ob ein Kriterium für die Änderung der Referenz erfüllt ist. Es können mehrere Kriterien verwendet werden, bei denen jeweils die Referenz geändert wird. Beispielsweise kann die Referenz abhängig von der Busspannung, die die primärseitige Schaltung versorgt, geändert werden. Die Referenz kann insbesondere gemäß einer Welligkeit der Busspannung geändert werden, um eine Welligkeit des Ausgangsstroms zu verringern. Alternativ oder zusätzlich kann die Referenz in Abhängigkeit von einem Dimmbefehl, den die Steuereinrichtung 14 empfängt, geändert werden, um den Ausgangsstrom auf einen neuen festen Wert einzustellen und so die Helligkeit der versorgten LEDs zu ändern. Alternativ oder zusätzlich kann zumindest in gewissen Betriebszuständen, beispielsweise beim Starten des Wandlers, abhängig von einer primärseitig erfassten Messgröße die Last bestimmt werden, die mit dem Ausgang des Wandlers verbunden ist. Die Referenz kann abhängig von der Last verändert werden, um lastabhängige Änderungen des Ausgangsstroms zu verringern.

Falls bei Schritt 54 ermittelt wird, dass die Referenz nicht geändert werden soll, kehrt das Verfahren zu Schritt 51 zurück. Es kann erneut ein Regelzyklus oder es können mehrere Regelzyklen durchlaufen werden. Falls bei Schritt 54 ermittelt wird, dass die Referenz geändert werden soll, wird bei Schritt 55 die Referenz entsprechend geändert. Die Referenz kann beispielsweise abhängig von einem empfangenen Dimmbefehl geändert werden. Dazu kann die Steuereinrichtung 14 einen empfangenen Helligkeitswert unter Verwendung eines Kennfelds, beispielsweise einer Lookup-Tabelle, und/oder anderweitig rechnerisch in einen neuen Wert für die Referenz umsetzen. Das Verfahren kehrt zu Schritt 51 zurück, wobei im nächsten Regelzyklus der neue Wert der Referenz verglichen wird.

Um eine Anpassung der Referenz abhängig von der Busspannung und/oder abhängig von einer Last, die mit dem Ausgang des Wandlers gekoppelt ist, durchzuführen, kann die primärseitige Schaltung des Wandlers entsprechende Größen erfassen und an die Steuereinrichtung 14 bereitstellen.

FIG. 5 ist ein Schaltbild eines Wandlers 59 nach einem weiteren Ausführungsbeispiel. Elemente oder Einrichtungen, die in Ausgestaltung und Funktion Elementen oder Einrichtungen entsprechen, die bereits unter Bezugnahme auf FIG. 1-4 beschrieben wurden, sind mit denselben Bezugszeichen bezeichnet.

Der Wandler 59 weist eine primärseitige Schaltung 60 mit einer getaktet betriebenen Halbbrückenschaltung und einem LLC-Resonanzkreis auf. Die Steuereinrichtung 14 ist so ausgestaltet, dass sie die Steuerung der Halbbrückenschaltung abhängig von einem primärseitig erfassten Peakstrom durchführt, um den Ausgangsstrom des Wandlers 59 zu regeln. Die Referenz kann dabei abhängig von der Busspannung Vbus und/oder abhängig von einer Last, die mit dem Ausgang des Wandlers verbunden ist, eingestellt werden.

Ein Wert vbus der Busspannung Vbus wird der Steuereinrichtung 14 über einen D/A-Wandler 62 zugeführt werden. Hochfrequentes Rauschen der Busspannung kann durch einen Kondensator 61 oder einen beispielsweise auch durch ein RC-Glied (Widerstand und Kondensator) als Tiefpass geglättet werden. Die Kapazität des Kondensators 61 ist so gewählt, dass die eine mit einer Frequenz von beispielsweise 100 Hz oszillierende Welligkeit (auch als Spannungs-"Ripple" bezeichnet) der Busspannung durch den Kondensator 61 nicht herausgefiltert und im Signal vbus an die Steuereinrichtung 14 bereitgestellt wird, d.h. die Grenzfrequenz der entsprechenden Tiefpassfilters liegt höher als die Frequenz der Spannungs-"Ripple", die der Versorgungsspannung aufgeprägt sind. Die Steuereinrichtung 14 kann den Wert vbus der Busspannung mit einer Rate abfragen, die größer als die Frequenz der Welligkeit der Busspannung ist. Die Steuereinrichtung 14 kann die Referenz zeitlich veränderlich, insbesondere mit der Periode der Welligkeit der Busspannung, ändern, um die Welligkeit des Ausgangsstroms zu verringern. Eine Anpassung der Referenz, die dem Komparator zugeführt wird und mit der der Peakstrom verglichen wird, erfolgt mit einer Rate, die ebenfalls größer als die Frequenz der Welligkeit der Busspannung ist.

Ein Wert iavg, der den gemittelten Strom durch den Shunt-Widerstand 23 repräsentiert, wird der Steuereinrichtung 14 über einen weiteren D/A-Wandler 65 zugeführt werden. Der Durchschnittswert des Stroms durch den Shunt-Widerstand 23 kann beispielsweise über einen Widerstand 63 und ein Tiefpassfilter mit einem Kondensator 64 erfasst werden. Der Durchschnittswert des Stroms durch den Shunt-Widerstand 23 kann der Steuereinrichtung 14 an einem anderen Anschluss zugeführt werden als das vom Peakstrom durch den Shunt-Widerstand 23 abhängige Signal. Der gemittelte Strom durch den Shunt-Widerstand 23 hängt von der abgegebenen Leistung und somit von der Last ab, die mit dem Ausgang 35 des Wandlers gekoppelt ist. Eine Änderung der Last, beispielsweise ein Änderung der Anzahl von versorgten LEDs, führt bei vorgegebener Busspannung Vbus zu einer Änderung des gemittelten Stroms durch den Shunt-Widerstand 23, die in bekannter Beziehung mit der Last am Ausgang steht. Dies erlaubt, auch die Last bzw. Änderungen der Last primärseitig zu erkennen. Die Referenz, die dem Komparator 24 zugeführt wird und mit der der Peakstrom verglichen wird, kann abhängig von der Last angepasst werden. Dazu kann beispielsweise ein linearisiertes Modell, das lastabhängige die Änderung des Ausgangsstroms angibt, und/oder ein Tabellenaufruf verwendet werden, um zu ermitteln, welche Anpassung der Referenz erforderlich ist, um lastabhängige Änderung des Ausgangsstroms zu reduzieren. Die lastabhängige Änderung des Ausgangsstroms, die ohne Kompensation, beispielsweise abhängig von der Anzahl von versorgten LEDs, resultieren würde, ist bekannt und theoretisch verstanden. Die funktionale Abhängigkeit des Ausgangsstroms von der Last ohne Kompensation kann verwendet werden, um entsprechende Änderungen der Referenz als Funktion der Last zu definieren, die die lastabhängigen Änderungen des Ausgangsstroms im Vergleich zum nicht kompensierten Verhalten verringern.

Die Steuereinrichtung 14 kann den Wert iavg, der zum gemittelten Strom durch den Shunt-Widerstand 23 proportional ist, auch für andere Funktionen verwenden. Beispielsweise kann die Steuereinrichtung 14 Informationen über die Last, wie sie im gemittelten Strom iavg detektiert werden, an ein zentrales Steuergerät übermitteln. Alternativ oder zusätzlich kann die Steuereinrichtung 14 abhängig von dem gemittelten Strom iavg einen Fehlerzustand erkennen. Der Fehlerzustand kann beispielsweise einem Kurzschluss oder einer offenen Schaltung am Ausgang des Wandlers entsprechen. Die Steuereinrichtung 14 kann einen entsprechenden Fehler-Betriebszustand einleiten, beispielsweise durch Ausgabe eines Fehlersignals und/oder Aktivierung eines Sicherheitsmodus und/oder Abschaltung.

Zusätzlich zu den Werten, die die Busspannung und die Last repräsentieren, kann die Steuereinrichtung 14 auch Helligkeitsbefehle erhalten und die Referenz, mit der der Peakstrom verglichen wird, abhängig von den Helligkeitsbefehlen anpassen.

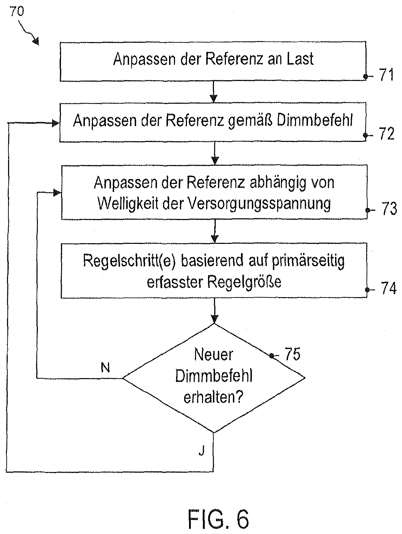

FIG. 6 ist ein Flussdiagramm eines Verfahrens 70, das von der Steuereinrichtung 14 ausgeführt werden kann. Wie unter Bezugnahme auf FIG. 6 erläutert werden wird, kann die Anpassung der Referenz auf unterschiedlichen zeitlichen Ebenen oder Zeithorizonten erfolgen. Eine lastabhängige Änderung der Referenz kann beispielsweise nur selten, z.B. immer beim Starten des Betriebsgeräts mit dem Wandler, durchgeführt werden. Ein Anpassen der Referenz abhängig von einem Dimmbefehl kann immer bei Empfangen eines Dimmbefehls durchgeführt werden. Mit einer Rate, die größer als eine Frequenz der Welligkeit der Versorgungsspannung für die primäre Seite des Wandlers ist, kann die Referenz an die Welligkeit der Versorgungsspannung angepasst werden.

Bei 71 wird die Referenz an die Last angepasst, die mit dem Ausgang des Wandlers verbunden ist. Die Last kann beispielsweise beim Starten des Betriebsgeräts mit dem Wandler abhängig von einem gemittelten Strom iavg durch einen Shunt-Widerstand erkannt werden. Schritt 71 kann in längeren Zeitabständen wiederholt werden. Dadurch kann beispielsweise der Ausfall einer LED erkannt und kompensiert werden.

Bei 72 wird die Referenz abhängig von einem Dimmbefehl angepasst. Schritt 72 kann immer dann wiederholt werden, wenn ein neuer Dimmbefehl empfangen wird.

Bei 73 wird die Referenz abhängig von dem momentan Wert der Versorgungsspannung der primären Seite angepasst. Dadurch kann eine Welligkeit des Ausgangsstroms, der durch eine Welligkeit der Versorgungsspannung hervorgerufen wird, mit einer vorwärts-Korrektur vorab korrigiert werden. Schritt 73 kann mit einer Rate ausgeführt werden, die größer als die Frequenz der Spannungs-"Ripple" in der Versorgungsspannung ist, beispielsweise größer als 100 Hz.

Bei 74 kann ein Regelschritt oder können mehrere Regelschritte durchgeführt werden. Dabei wird jeweils abhängig von einem Vergleich des primärseitigen Peakstroms mit der Referenz die Halbbrückensteuerung angepasst. Beispielsweise kann die Frequenz, mit der die Schalter der Halbbrücke geschaltet werden, geändert werden, wenn der Peakstrom die Referenz übersteigt.

Bei 75 wird überprüft, ob ein neuer Dimmbefehl empfangen wird. Falls ein neuer Dimmbefehl empfangen wird, kehrt das Verfahren zu Schritt 72 zurück. Andernfalls kehrt das Verfahren zu Schritt 73 zurück.

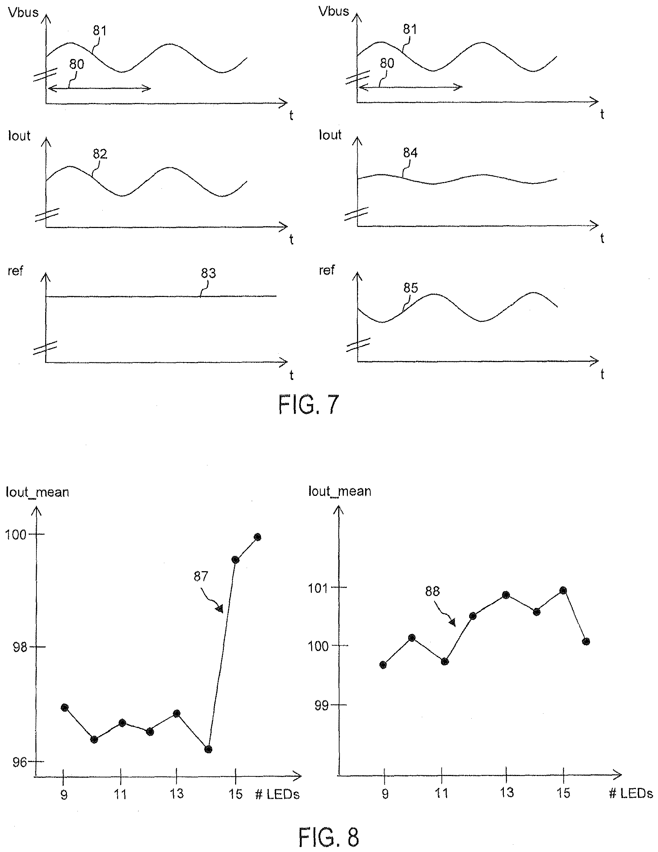

FIG. 7 ist eine schematische Darstellung zur Erläuterung der Korrektur der Spannungs-"Ripple" bzw. Welligkeit der Versorgungsspannung, mit der eine Welligkeit des Ausgangsstroms verringert werden kann.

Wie auf der linken Seite von FIG. 7 dargestellt ist, weist die Versorgungsspannung der primären Seite eine Welligkeit 81 auf. Die Spannung kann mit einer zeitlichen Periode 80 schwanken. Die Frequenz kann beispielsweise 100 Hz entsprechen. Eine derartige Welligkeit kann der von dem AC/DC-Wandler 10 des Betriebsgeräts 2 von FIG. 1 gelieferten Busspannung aufgeprägt sein. Wird die Referenz ref konstant gehalten, kann die Welligkeit der Versorgungsspannung der primären Seite des Wandlers zu einer Welligkeit des Ausgangsstroms 82 führen.

Falls, wie auf der rechten Seite von FIG. 7 dargestellt, die Referenz 85 gemäß der Welligkeit der Versorgungsspannung zeitabhängig angepasst wird, kann der Ausgangsstrom 84 des Wandlers eine Welligkeit aufweisen, deren Amplitude kleiner als im Fall einer konstanten Referenz ist. Zur entsprechenden zeitabhängigen Anpassung der Referenz kann die Referenz jeweils nach einem Zeitraum verändert werden, der klein im Vergleich zur Periodendauer 80 der Welligkeit der Versorgungsspannung ist. Die Versorgungsspannung kann kontinuierlich oder quasi-kontinuierlich überwacht werden, und die Referenz kann jeweils entsprechend angepasst werden.

FIG. 8 ist eine schematische Darstellung zur Erläuterung der Kompensation von lastabhängigen Änderungen des Ausgangsstroms. FIG. 8 zeigt den zeitlich gemittelten Ausgangsstrom Iout_mean in Prozent, normiert auf einen Sollwert, für unterschiedliche Zahlen von LEDs, die ein Beispiel für unterschiedliche Ausgangsleistungen bzw. Lasten sind, die mit dem Wandler versorgt werden.

Die linke Seite von FIG. 8 zeigt den Fall, in dem keine lastabhängige Kompensation vorgenommen wird. Falls ausgehend von einem Beleuchtungssystem mit sechzehn LEDs die Anzahl von LEDs verringert wird, führt dies zu einer Änderung des gemittelten Ausgangsstroms des Wandlers, mit dem die LEDs versorgt werden. Die entsprechende Änderung weist eine funktionale Abhängigkeit 87 auf. Bei dem dargestellten Fall kann eine Schwankung des gemittelten Ausgangsstroms von bis zu 4 % beobachtet werden.

Die rechte Seite von FIG. 8 zeigt den Fall, in dem die Steuereinrichtung primärseitig die Last erkennt, beispielsweise aus dem gemittelten Strom durch den Shunt-Widerstand, und eine lastabhängige Kompensation durchführt. Für die auf der rechten Seite von FIG. 8 dargestellten Daten wurde eine Kompensation basierend auf einem linearisierten Modell durchgeführt. Die Referenz kann abhängig von dem gemittelten Strom durch den Shunt-Widerstand um einen Wert erhöht oder erniedrigt werden, der von dem gemittelten Strom durch den Shunt-Widerstand abhängt. Neben einem linearisierten Modell, bei dem die Änderung der Referenz linear von dem gemittelten Strom durch den Shunt-Widerstand abhängt, kann zur weiteren Reduzierung von lastabhängigen Einflüssen des Ausgangsstroms auch ein Kennfeld oder mehrere Kennfelder verwendet werden. Wie auf der rechten Seite von FIG. 8 dargestellt, führt bereits eine Kompensation basierend auf einem linearisierten Modell zu einer Verringerung lastabhängiger Effekte im Ausgangsstrom.

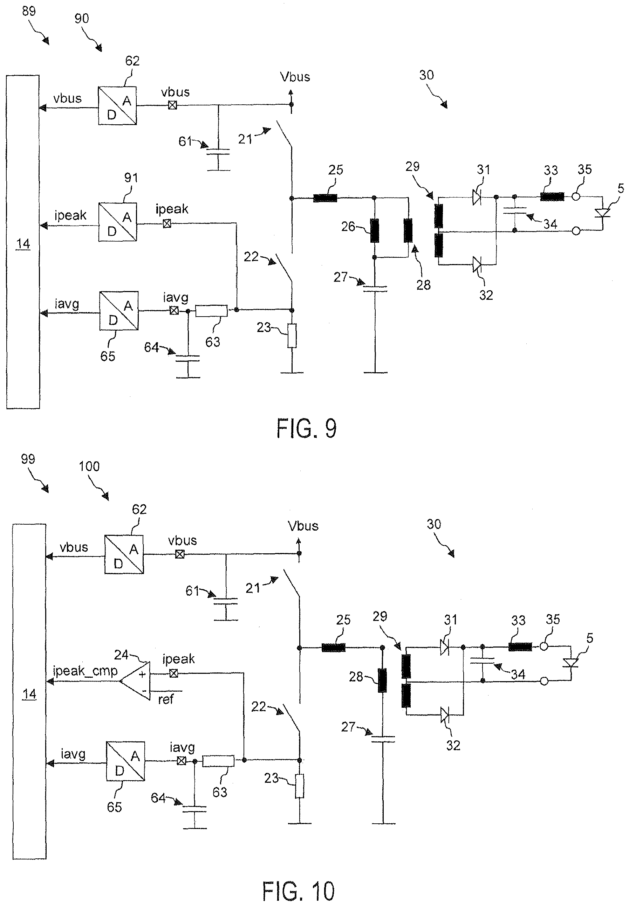

Weitere Abwandlungen des Wandlers und der Verfahren können bei weiteren Ausführungsbeispielen realisiert sein. Beispielhaft werden unter Bezugnahme auf FIG. 9 und FIG. 10 zwei weitere Wandler nach Ausführungsbeispielen beschrieben, wobei Elemente, die in Ausgestaltung und Funktion Elementen entsprechen, die unter Bezugnahme auf FIG. 1-8 beschrieben wurden, mit denselben Bezugszeichen bezeichnet sind.

FIG. 9 zeigt einen Wandler 89 nach einem weiteren Ausführungsbeispiel, der eine primärseitige Schaltung 90 und eine sekundärseitige Schaltung 30 aufweist. Bei dem Wandler 89 wird das den Peakstrom durch den Shunt-Widerstand 23 anzeigende Signal nicht mit einem analogen Referenzsignal verglichen. Informationen über die Stromstärke durch den Shunt-Widerstand 23 werden der Steuereinrichtung 14 über den A/D-Wandler 91 zugeführt. Die Steuereinrichtung 14 kann rechnerisch überprüfen, ob der Peakstrom durch den Shunt-Widerstand 23 eine Referenz übersteigt. Die Referenz ist hierbei ein digitaler Referenzwert, der von der Steuereinrichtung 14 verwaltet wird. Anders als bei den Wandlern von FIG. 2 und FIG. 5 muss kein analoges Referenzsignal erzeugt werden.

Die Anpassung und/oder Änderung der Referenz kann von der Steuereinrichtung 14 wie unter Bezugnahme auf FIG. 1-8 beschrieben durchgeführt werden.

FIG. 10 zeigt einen Wandler 99 nach einem weiteren Ausführungsbeispiel, der eine primärseitige Schaltung 100 und eine sekundärseitige Schaltung 30 aufweist. Bei dem Wandler 99 weist die primärseitige Schaltung 100 die Halbbrückenschaltung mit getaktet betriebenen Schaltern 21, 22 auf. Bei dem LLC-Resonanzkreis des Wandlers 99 dient die Primärspule 28 des Transformators gleichzeitig als die größere der Induktivitäten des LLC-Resonanzkreises.

Während Ausführungsbeispiele unter Bezugnahme auf die Figuren beschrieben wurden, können Abwandlungen bei weiteren Ausführungsbeispielen realisiert werden. Beispielsweise kann eine Regelung des Ausgangsstroms des Wandlers, der als FCC-Gerät ausgestaltet ist, auch abhängig von einer anderen primärseitig erfassten Regelgröße durchgeführt werden. Während die Verwendung des Peakstroms durch den Shunt-Widerstand als Regelgröße mit einem geringen schaltungstechnischen Aufwand realisiert werden kann, kann beispielsweise auch ein separater, weiterer Widerstand verwendet werden, der beispielsweise in die Halbbrückenschaltung integriert sein kann. Der Peakstrom durch diesen weiteren Widerstand kann als Regelgröße verwendet werden, um den Ausgangsstrom des Wandlers auf einen Sollwert zu regeln.

Während Ausführungsbeispiele beschrieben wurden, bei denen ein Lasterkennung abhängig von einem Durchschnittswert des Stroms durch den Shunt-Widerstand durchgeführt wurde, kann die Lasterkennung auch abhängig von anderen, insbesondere primärseitig erfassten, Größen durchgeführt werden.

Während Ausführungsbeispiele beschrieben wurden, bei denen die Steuereinrichtung die Referenz basierend auf unterschiedlichen Größen, beispielsweise der Welligkeit der Busspannung und der erkannten Last, und auf unterschiedlichen zeitlichen Horizonten anpassen kann, kann beispielsweise auch nur eine Anpassung der Referenz abhängig von der Welligkeit der Versorgungsspannung oder nur eine Anpassung der Referenz abhängig von der erkannten Last erfolgen.
Induktivitäten und Kapazitäten können jeweils durch entsprechende induktive bzw. kapazitive Elemente gebildet werden. Es ist jedoch auch möglich, dass kleinere Induktivitäten, beispielsweise die kleinere Induktivität des LLC-Resonanzkreises, als Streuinduktivität ausgebildet sind.

Wandler nach Ausführungsbeispielen können insbesondere zur Energieversorgung von LEDs eingesetzt werden.

## Patentansprüche

1. Wandler (19; 59; 89; 99) mit Potentialtrennung (39), der zur Versorgung eines Leuchtmittels (3; 5) eingerichtet ist, umfassend:
eine primärseitige Schaltung (20; 60; 90; 100) mit einer Halbbrückenschaltung, die zwei wechselseitig getaktete Schalter (21, 22) aufweist, und mit einem Resonanzkreis (25-27; 25, 26, 28), der mit einem Knoten zwischen den zwei Schaltern (21, 22) gekoppelt ist, wobei der Resonanzkreis (25-27; 25, 26, 28) einen LLC-Resonanzkreis (25-27; 25, 26, 28) umfasst,
eine sekundärseitige Schaltung (30) mit einem Ausgang (35) zur Energieversorgung des Leuchtmittels (3; 5), und
eine Steuereinrichtung (14), die eingerichtet ist, um die Halbbrückenschaltung abhängig von einer in der primärseitigen Schaltung (20; 60; 90; 100) erfassten Regelgröße (ipeak) zu steuern, um eine von der sekundärseitigen Schaltung (30) an das Leuchtmittel (3; 5) bereitgestellte Stromstärke auf einen Sollwert zu regeln,
**dadurch gekennzeichnet,**
**dass** die Steuereinrichtung (14) eingerichtet ist, um die Halbbrückenschaltung abhängig von einem Vergleich der Regelgröße (ipeak) mit einer Referenz (ref) zu steuern, und
**dass** die primärseitige Schaltung (20; 60; 90; 100) eingerichtet ist, um Informationen (Vbus) über eine Versorgungsspannung (Vbus; 81) der primärseitigen Schaltung (20; 60; 90; 100) an die Steuereinrichtung (14) bereitzustellen,
wobei die Steuereinrichtung (14) eingerichtet ist, um die Referenz (ref; 85) abhängig von den Informationen über die Versorgungsspannung (Vbus; 81) zu ändern.

2. Wandler nach Anspruch 1,
wobei die Steuereinrichtung (14) eingerichtet ist, um eine Frequenz, mit der die zwei Schalter (21, 22) der Halbbrückenschaltung geschaltet werden, abhängig von der erfassten Regelgröße (ipeak) einzustellen, um die von der sekundärseitigen Schaltung (30) an das Leuchtmittel (3; 5) bereitgestellte Stromstärke auf den Sollwert zu regeln.

3. Wandler nach Anspruch 1 oder Anspruch 2,
wobei der Wandler einen mit der Steuereinrichtung (14) gekoppelten Komparator (24) zum Vergleichen der Regelgröße (ipeak) mit der Referenz (ref) umfasst.

4. Wandler nach einem der Ansprüche 1-3,
wobei die Steuereinrichtung (14) eingerichtet ist, um die Referenz (ref; 85) abhängig von einer Welligkeit der Versorgungsspannung (Vbus; 81) zeitabhängig, insbesondere periodisch, zu ändern.

5. Wandler nach einem der Ansprüche 1, 3 und 4,
wobei die Steuereinrichtung (14) eingerichtet ist, um die Referenz (ref) abhängig von einem Dimmbefehl zu ändern,
wobei die Steuereinrichtung (14) eingerichtet ist, um abhängig von einer in der primärseitigen Schaltung (20; 60; 90; 100) erfassten Messgröße (iavg) Informationen über eine Last (3; 5), die mit dem Ausgang (35) der sekundärseitigen Schaltung (30) verbunden ist, zu ermitteln.

6. Wandler nach Anspruch 5,
wobei die Steuereinrichtung (14) eingerichtet ist, um abhängig von der Messgröße (iavg) eine Änderung einer Anzahl von LEDs, die mit dem Ausgang der sekundärseitigen Schaltung (30) verbunden sind, zu detektieren.

7. Wandler nach Anspruch 5 oder 6,
wobei die Steuereinrichtung (14) eingerichtet ist, um abhängig von der Messgröße (iavg) wenigstens eine der folgenden Aktionen auszuführen:
- Anpassen der Referenz (ref) abhängig von der Messgröße (iavg) zur Kompensation lastabhängiger Helligkeitsänderungen;
- Leistungsbegrenzung;
- Fehlerdetektion zur Einleitung eines Fehlermodus;
- Erzeugen eines Signals in Abhängigkeit von der Messgröße (iavg) und Ausgaben des Signals an einen Signalbus (4).

8. Wandler nach einem der Ansprüche 5-7,
wobei die Regelgröße (ipeak) proportional zu einem Peakwert eines Stroms in der primärseitigen Schaltung (20; 60; 90; 100) ist und die Messgröße proportional zu einem Durchschnittswert desselben Stroms in der primärseitigen Schaltung (20; 60; 90; 100) ist.

9. Wandler nach einem der Ansprüche 5-8,
wobei die primärseitige Schaltung (20; 60; 90; 100) einen Shunt-Widerstand (23) umfasst, der mit den Schaltern (21, 22) der Halbbrückenschaltung in Serie geschaltet ist, wobei die Regelgröße (ipeak) proportional zu einem Peakstrom durch den Shunt-Widerstand (23) ist und die Messgröße (iavg) proportional zu einem Durchschnittswert des Stroms durch den Shunt-Widerstand (23) ist.

10. Wandler nach einem der vorhergehenden Ansprüche,
wobei der Resonanzkreis (25-27; 25, 26, 28) ein induktives Element (25) und ein kapazitives Element (27) umfasst, die mit einer Primärspule (28) eines Transformators in Serie geschaltet sind,
wobei die sekundärseitige Schaltung (30) ein mit dem Ausgang (35) verbundenes weiteres induktives Element (33) umfasst.

11. Wandler nach einem der vorhergehenden Ansprüche,
welcher als Konstantstromquelle ausgestaltet ist.

12. LED-Konverter, umfassend
den Wandler (19; 59; 89; 99) nach einem der vorhergehenden Ansprüche.

## Claims

1. Converter (19; 59; 89; 99) with potential separation (39) and which is designed to supply an illuminant (3; 5), comprises:
- a primary circuit (20; 60; 90; 100) having a half-bridge circuit comprising two mutually clocked switches (21, 22) and a resonant circuit (25-27; 25, 26, 28) is coupled to a node between the two switches (21, 22), wherein the resonant circuit (25-27; 25, 26, 28) comprises an LLC resonant circuit (25-27; 25, 26, 28),
- a secondary-side circuit (30) having an output (35) for the power supply of the luminant (3; 5), and
- a control device (14) which is designed to control the half-bridge circuit as a function of a detected control variable (ipeak) in the primary-side circuit (20; 60; 90; 100) in order to adjust a current provided to the luminant (3; 5) from the secondary-side circuit (30), to a setpoint,
**characterized in that**
- the control device (14) is designed to control the half-bridge circuit as a result of a comparison of the controlled variable (ipeak) with a reference (ref), and
- the primary-side circuit (20; 60; 90; 100) is designed to provide information (Vbus) to the control device (14) via a supply voltage (Vbus; 81) of the primary-side circuit (20; 60; 90; 100),
- wherein the control means (14) is arranged to change the reference (ref; 85) in response to the information about the supply voltage (Vbus; 81).

2. Converter according to claim 1, wherein the control means (14) is designed to set a frequency at which the two switches (21, 22) of the half-bridge circuit are switched, as a function of the detected control variable (ipeak) in order to adjust a current provided to the luminant (3; 5) from the secondary-side circuit (30), to a setpoint.

3. Converter according to claim 1 or claim 2, wherein the converter comprises a comparator (24) coupled to the control device (14) in order to compare the controlled variable (ipeak) with the reference (ref).

4. Converter according to any one of the claims 1-3, wherein the control device (14) is designed to change the reference (ref; 85) as a function of a ripple of the supply voltage (Vbus; 81) over time, in particular periodically.

5. Converter according to any one of the claims 1, 3 and 4,
wherein the control means (14) is designed to change the reference (ref) in response to a dimming command,
wherein the control means (14) is designed to determine information about a load (3; 5) connected to the output (35) of the secondary side circuit (30) as a function of a measured variable (iavg) detected in the primary-side circuit (20; 60; 90; 100).

6. Converter according to claim 5, wherein the control device (14) is designed to detect a change in a number of LEDs connected to the output of the secondary side circuit (30) as a function of the measured value (iavg).

7. Converter according to claim 5 or 6, wherein the control device (14) is designed to perform at least one of the following actions, as a function of the measured variable (iavg):
- adjustment of the reference (ref) as a function of the measured variable (iavg) to compensate for load-dependent brightness changes;
- power limitation;
- error detection to initiate a fault mode;
- production of a signal as a function of the measured variable (iavg) and output of the signal to a signal bus (4).

8. Converter according to any one of claims 5-7, wherein the control variable (ipeak) is proportional to a peak value of a current in the primary-side circuit (20; 60; 90; 100), while the measured variable is proportional to an average value of the same current in the primary-side circuit (20; 60; 90; 100).

9. Converter according to any one of the claims 5-8, wherein the primary-side circuit (20; 60; 90; 100) comprises a shunt resistor (23) connected in series with the switches (21, 22) of the half-bridge circuit, wherein the control variable (ipeak) is proportional to a peak current through the shunt resistor (23), while the measured value (iavg) is proportional to an average value of the current through the shunt resistor (23).

10. Converter according to any one of the preceding claims,
wherein the resonant circuit (25-27; 25, 26, 28) comprises an inductive element (25) and a capacitive element (27) connected in series with a primary coil (28) of a transformer,
wherein the secondary-side circuit (30) comprises a further inductive element (33) connected to the output (35).

11. Converter according to one of the preceding claims, wherein it is designed as a constant current source.

12. LED converter, comprising the converter (19; 59; 89; 99) according to one of the preceding claims.

## Revendications

1. Convertisseur (19 ; 59 ; 89 ; 99) avec séparation de potentiel (39), qui est conçu pour l'alimentation d'un moyen d'éclairage (3 ; 5), comprenant :
un circuit côté primaire (20 ; 60 ; 90 ; 100) avec un circuit en demi-pont, qui comprend deux commutateurs (21, 22) cadencés de manière alternée, et avec un circuit de résonance (25-27 ; 25, 26, 28), qui est couplé avec un noeud entre les deux commutateurs (21, 22), le circuit de résonance (25-27 ; 25, 26, 28) comprenant un circuit de résonance LLC (25-27 ; 25, 26, 28),
un circuit côté secondaire (30) avec une sortie (35) pour l'alimentation en énergie du moyen d'éclairage (3 ; 5) et
un dispositif de commande (14), qui est conçu pour commander le circuit en demi-pont en fonction d'une grandeur de réglage (ipeak) mesurée dans le circuit côté primaire (20 ; 60 ; 90 ; 100), afin de régler une intensité de courant envoyée par le circuit côté secondaire (30) au moyen d'éclairage (3 ; 5) à une valeur de consigne,
**caractérisé en ce que**
le dispositif de commande (14) est conçu pour commander le circuit en demi-pont en fonction d'une comparaison de la grandeur de réglage (ipeak) avec une référence (ref) et
le circuit côté primaire (20; 60; 90; 100) est conçu pour envoyer des informations (Vbus), par l'intermédiaire d'une tension d'alimentation (Vbus ; 81) du circuit côté primaire (20 ; 60 ; 90 ; 100) au dispositif de commande (14),
le dispositif de commande (14) étant conçu pour modifier la référence (ref ; 85) en fonction des informations envoyées par l'intermédiaire de la tension d'alimentation (Vbus ; 81).

2. Convertisseur selon la revendication 1,
le dispositif de commande (14) étant conçu pour régler une fréquence, avec laquelle les deux commutateurs (21, 22) du circuit en demi-pont sont commutés, en fonction de la grandeur de réglage (ipeak) mesurée, afin de régler l'intensité de courant envoyée par le circuit côté secondaire (30) au moyen d'éclairage (3 ; 5).

3. Convertisseur selon la revendication 1 ou la revendication 2,
le convertisseur comprenant un comparateur (24) couplé avec le dispositif de commande (14) pour la comparaison de la grandeur de réglage (ipeak) avec la référence (ref).

4. Convertisseur selon l'une des revendications 1 à 3,
le dispositif de commande (14) étant conçu pour modifier la référence (ref ; 85) en fonction d'une ondulation de la tension d'alimentation (Vbus ; 81) au cours du temps, plus particulièrement de manière périodique.

5. Convertisseur selon l'une des revendications 1, 3 et 4,
le dispositif de commande (14) étant conçu pour modifier la référence (ref) en fonction d'une instruction d'atténuation,
le dispositif de commande (14) étant conçu pour déterminer, en fonction d'un grandeur de mesure (iavg) mesurée dans le circuit côté primaire (20 ; 60 ; 90 ; 100), des informations concernant une charge (3 ; 5), qui est reliée à la sortie (35) du circuit côté secondaire (30).

6. Convertisseur selon la revendication 5,
le dispositif de commande (14) étant conçu pour détecter, en fonction de la grandeur de mesure (iavg), une modification d'un nombre de LED, qui sont reliées à la sortie du circuit côté secondaire (30).

7. Convertisseur selon la revendication 5 ou 6,
le dispositif de commande (14) étant conçu pour réaliser, en fonction de la grandeur de mesure (iavg), au moins une des actions suivantes :
- adaptation de la référence (ref) en fonction de grandeur de mesure (iavg) pour la compensation des modifications de la luminosité en fonction de la charge ;
- limitation de la puissance ;
- détection d'erreurs pour l'initialisation d'un mode d'erreur ;
- génération d'un signal en fonction de la grandeur de mesure (iavg) et envoi du signal à un bus de signal (4).

8. Convertisseur selon l'une des revendications 5 à 7,
la grandeur de réglage (ipeak) étant proportionnelle à une valeur de crête d'un courant dans le circuit côté primaire (20 ; 60 ; 90 ; 100) et la grandeur de mesure étant proportionnelle à une valeur moyenne du même courant dans le circuit côté primaire (20 ; 60 ; 90 ; 100).

9. Convertisseur selon l'une des revendications 5 à 8,
le circuit côté primaire (20 ; 60 ; 90 ; 100) comprenant une résistance de shunt (23) qui est branchée en série avec les commutateurs (21, 22) du circuit en demi-pont, la grandeur de réglage (ipeak) étant proportionnelle à un courant de crête à travers la résistance de shunt (23) et la grandeur de mesure (iavg) étant proportionnelle à une valeur moyenne du courant à travers la résistance de shunt (23).

10. Convertisseur selon l'une des revendications précédentes,
le circuit de résonance (25-27 ; 25, 26, 28) comprenant un élément inductif (25) et un élément capacitif (27), qui sont branchés en série avec une bobine primaire (28) d'un transformateur,
le circuit côté secondaire (30) comprenant un autre élément inductif (33) relié à la sortie (35).

11. Convertisseur selon l'une des revendications précédentes,
qui est conçu comme une source de courant constant.

12. Convertisseur pour LED comprenant
le convertisseur (19 ; 59 ; 89 ; 99) selon l'une des revendications précédentes.
